(19) Europäisches Patentamt
European Patent Office
Office européen des brevets

(11) **EP 2 071 514 A2**

(12) **EUROPEAN PATENT APPLICATION**

(43) Date of publication:
**17.06.2009 Bulletin 2009/25**

(51) Int Cl.:
*G06T 7/00* (2006.01)   *H04N 7/26* (2006.01)

(21) Application number: **08162490.0**

(22) Date of filing: **18.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.12.2007 KR 20070129135**

(71) Applicant: **Samsung Electronics Co., Ltd.**
**Suwon-si, Gyeonggi-do 442-743 (KR)**

(72) Inventors:
• **Jeong, Jin Guk**
  **Gyeonggi-do 446-712 (KR)**
• **Hwang, Eui Hyeon**
  **Gyeonggi-do 446-712 (KR)**
• **Park, Gyu-Tae**
  **Gyeonggi-do 446-712 (KR)**

(74) Representative: **Grünecker, Kinkeldey,**
**Stockmair & Schwanhäusser**
**Anwaltssozietät**
**Leopoldstrasse 4**
**80802 München (DE)**

(54) **Background modeling for video data compression**

(57)   A video data compression method, medium, and system. The video data compression method, medium, and system includes receiving image data, generating background model data of the image data, determining a moving object region based on the image data and the background model data, estimating a motion value of the moving object region, and compressing the image data by referring to at least one of the background model data and the estimated motion value.

FIG. 1

**Description**

BACKGROUND

1. Field

One or more embodiments of the present invention relate to a video data compression method, medium, and system, and more particularly, to a video data compression method, medium, and system to efficiently compress video data.

2. Description of the Related Art

Currently, video surveillance systems are widely used in response to an increased interest in security. Along with the development of high-capacity storage media, digital video recording (DVR) systems are widely used in video surveillance systems. A DVR system may digitally store videos, extract videos from a storage medium when necessary, and analyze such videos.

A DVR system compresses recorded video data using various video compression methods and stores the compressed video data in a storage medium, thereby reducing a system cost by storing efficiently within the storage media capacity. Existing video compression algorithms are used as the video compression method, including compression methods especially researched and developed for enhancing the image quality of a region of interest (ROI).

Recorded security videos are legally required to be kept for a particular period of time. Accordingly, a mass storage medium is needed for security videos of significant size, for example, a security video surveilling a wide area, or when a number of security videos exist. However, in a DVR system, since the system cost increases with an increase in the capacity of a storage medium, as a practical matter, the capacity of a storage medium is limited. Also, since a network bandwidth is limited in a commercialized Internet Protocol (IP) surveillance system, reduction in the size of recorded videos is required.

Accordingly, to efficiently embody a security video system, a compression scheme guaranteeing compatibility by using a standardized video compression method and reducing the size of a security video, without sacrificing image quality of an ROI during compression of the security video, is needed.

SUMMARY

To achieve the above and/or other aspects and advantages, embodiments of the present invention include a video data compression method, including generating background model data of the image data, determining a moving object region based on the image data and the background model data, estimating a motion value of the moving object region, and compressing the image data using at least one of the background model data and the estimated motion value.

To achieve the above and/or other aspects and advantages, embodiments of the present invention include a video data compression system, including a background model generation unit to generate background model data from image data, a moving object determination unit to determine a moving object region based on the input image data and the background model data, a motion estimation unit to estimate a motion value of the moving object region, and a compression unit to compress the image data using at least one of the background model data and the estimated motion value.

To achieve the above and/or other aspects and advantages, embodiments of the present invention include a video data compression method, including generating background model data from a first frame of a surveyed area, detecting movement of an object within a frame subsequent to the first frame of the surveyed area, considering the generated background model data and encoding the object as a Region of Interest (ROI) if the detected movement meets a predetermined threshold.

To achieve the above and/or other aspects and advantages, embodiments of the present invention include a video data compression method, including determining a differential image by calculating a difference between at least two sequential images, calculating a differential motion saliency for blocks of the differential image, determining a set of blocks of the differential image with the calculated differential motion saliency meeting a threshold, and generating a moving object region based upon linking the determined set of blocks of the differential image, for encoding an image other than a background image for the two sequential images.

Additional aspects, features, and/or advantages will be set forth in part in the description which follows and, in part, will be apparent from the description, or may be learned by practice of the invention.

BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:

FIG. 1 illustrates a video data compression method, according to an embodiment of the present invention;

FIG. 2 illustrates a generating of a background model data, such as in the video data compression method of FIG. 1, according to an embodiment of the present invention;

FIG. 3 illustrates a determining of a moving object region, such as in the video data compression method of FIG. 1, according to an embodiment of the present invention;

FIG. 4 illustrates an example of a configuration module performing a motion analysis, such as in FIG. 3, according to an embodiment of the present invention; and

FIG. 5 illustrates an example of a video data compression system, according to an embodiment of the present invention.

## DETAILED DESCRIPTION OF THE EMBODIMENTS

Reference will now be made in detail to embodiments, examples of which are illustrated in the accompanying drawings, wherein like reference numerals refer to like elements throughout. In this regard, embodiments of the present invention may be embodied in many different forms and should not be construed as being limited to embodiments set forth herein. Accordingly, embodiments are merely described below, by referring to the figures, to explain aspects of the present invention.

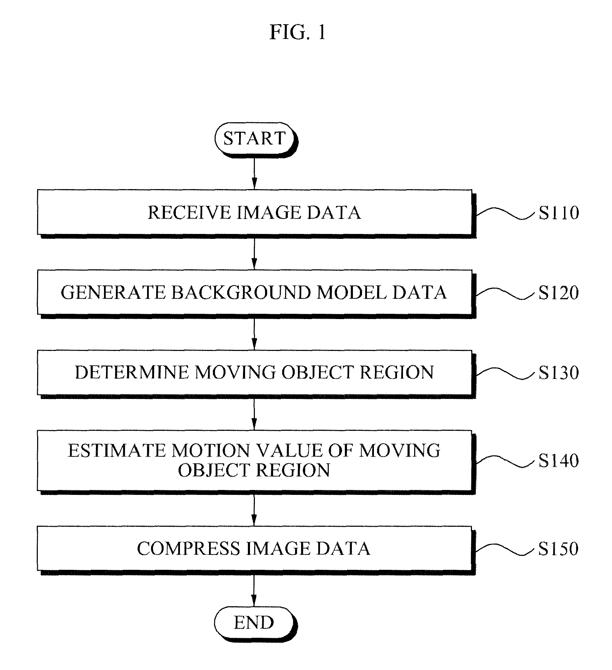

FIG. 1 illustrates a video data compression method, according to an embodiment of the present invention.

Referring to FIG. 1, the video data compression method may include the following example operations.

In operation S110, image data is received. The image data may be data input by a camera, or other imaging devices, included in a security video system.

In operation S120, background model data of the image data is generated.

When a security camera records a video, the background scene of the video is relatively motionless. Characteristics of the background are used to create a model of the background based on a predetermined number of frames and modeled data is generated as the background model data. The background model data indicates a portion of the video which is relatively motionless and thus continuously shown without change in the predetermined number of frames. Once the background model data is generated, it may become a reference for detecting motion in subsequent frames. In an embodiment, for example, one or more first frames may represent the background and future frames may include additional information in addition to the background.

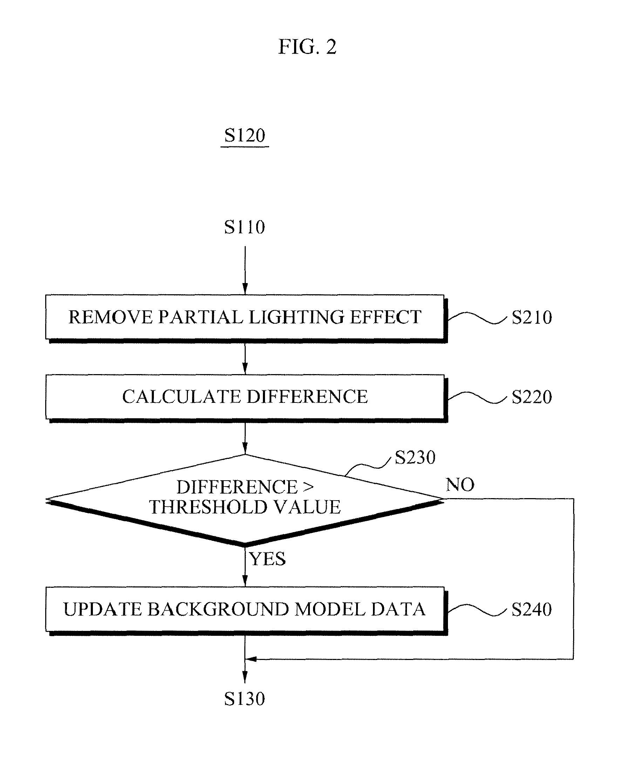

A generating of operation S120 will be described in greater detail with reference to FIG. 2.

FIG. 2 illustrates the generating of the background model data in operation S120, within the context of the video data compression method of FIG. 1. Referring to FIG. 2, in operation S210, a partial lighting effect of the inputted image data may be removed to generate the background model data of the input image data. According to the present embodiment, a histogram equalization, a Retinex filter, or other types of filters may be used to remove the partial lighting effect or a lighting effect caused by an object with a reflective nature. A function evaluated to apply a Retinex filter may be expressed by the below Equation 1, for example.

Equation 1:

$$R_i(x, y) = \log I_i(x, y) - \log[F(x, y) * I_i(x, y)]$$

$$R_i(x, y) = \log \frac{I_i(x, y)}{F(x, y) * I_i(x, y)} = \log \frac{I_i(x, y)}{\bar{I}_i(x, y)},$$

Here, (x, y) are coordinates of a pixel of each frame, $R_i(x, y)$ is a Retinex output of the pixel (x, y) of an $i^{th}$ frame image, and $I_i(x, y)$ is image data inputted with respect to the pixel (x, y) of the $i^{th}$ frame image. Also, F(x, y) denotes a Gaussian Kernel of the pixel (x, y), and $\bar{I}_i$ denotes an average of $I_i(x, y)$.

In operation S220, a difference between the image data having the partial lighting effect removed and the background model data may be calculated. When calculating the difference, a sum of Euclidean distances in a pixel unit and a sum of block differences of the image data having the partial lighting effect removed and the background model data may be used. In addition, the difference may be calculated using an Edge map of a background model and Edge map of an input frame, noting that alternative embodiments are equally available. For example, a disclosed method such as a homogeneity operator, a difference operator, or other operators may be used as a method of detecting an Edge map.

In operation S230, the difference and a predetermined threshold value are compared based on the calculated difference. When the difference is compared to be greater than the predetermined threshold value, it is determined that the background has changed. In operation S240, the background model data is updated. Conversely, when the difference is compared to be less than the predetermined threshold value, it may be determined that the background does not change or a change of the background is insignificant, and thus the background model data may be defined without being updated.

Referring again to FIG. 1, in operation S130, a moving object region of the image data is determined after determining the background model data.

An image region that differs from the background model data may be defined as the moving object region in an image frame after the background model data has been defined. The moving object region may be an image region being entirely different from the background model data, or an image region that continuously changes over a predetermined period of time, for example.

The moving object region may further be managed as a single object, or divided into a plurality of subregions and respectively managed.

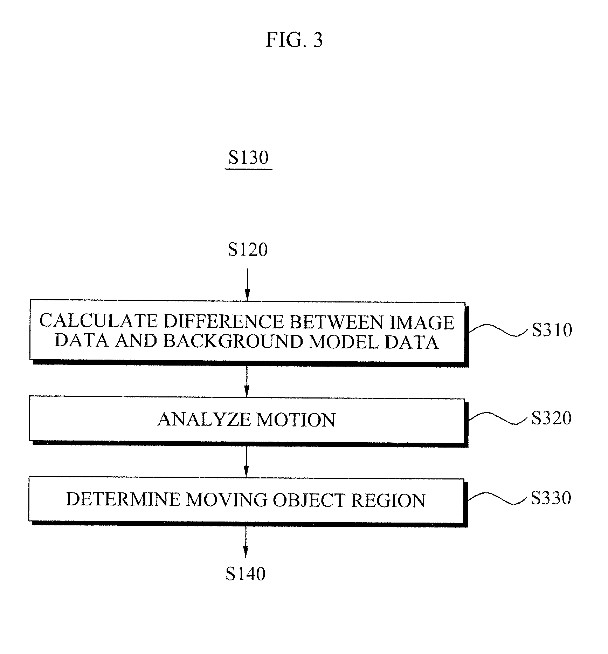

A determining of operation S130 will be described in greater detail with reference to FIG. 3.

FIG. 3 illustrates an operation of determining the moving object region, such as in FIG. 1, according to an embodiment of the present invention. Referring to FIG. 3, in operation S310, the difference between the input image data and the background model data determined in operation S120 is calculated. When the calculated difference is greater than the predetermined threshold value, for example, for a particular region of the image data, the region may be determined as a moving object region candidate. In operation S320, a motion of the determined one or more moving object region candidates may further be analyzed.

A motion corresponding to a directional motion in the input image data and satisfying a predetermined criterion may thus be detected from the analyzed motion, and an image region detected where a corresponding motion is extracted. In operation S330, the extracted image region may be filtered and then determined to be the moving object region. For example, when the extracted image region is small, noise may be the cause of the motion corresponding to the extracted image region . Accordingly, filtering may remove such an error.

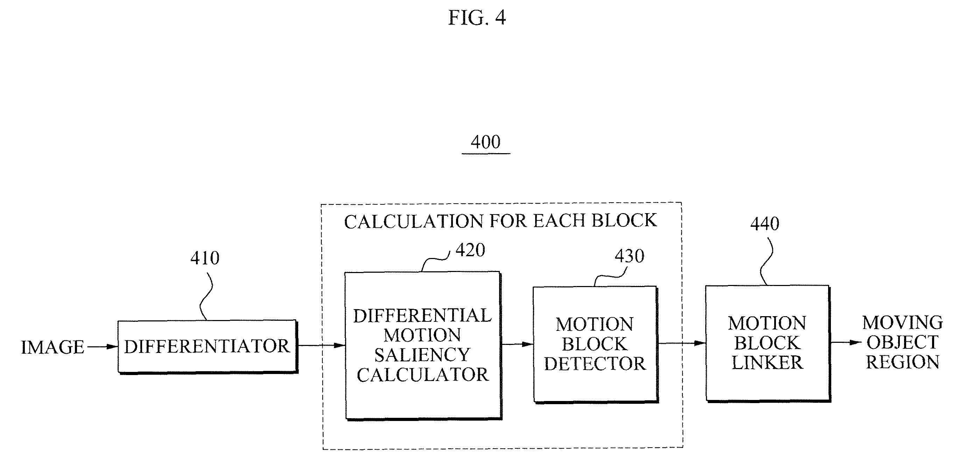

FIG. 4 illustrates an example of a configuration module 400, e.g., performing the motion analysis of FIG. 3, according to an embodiment of the present invention.

The configuration module 400 may include a differentiator 410, a differential motion saliency calculator 420, a motion block detector 430, and a motion block linker 440, for example.

The differentiator 410 generates a differential image derived from an input image. The differentiator 410 may be embodied through a subtractor or a delay. The subtractor subtracts a frame delayed via the delay and a current frame. The differentiator 410 may be simply embodied and operated at high speed. In addition, the differentiator 410 may be used without losing information about a context of an image.

The differential motion saliency calculator 420 calculates a motion saliency which represents a directionality for each block from an input coded differential image. That is, a motion saliency in a positive/negative direction for both an x axis and a y axis is calculated.

The motion block detector 430 detects a portion having a great directional motion saliency within each of the blocks as a motion block, for example. The motion block detector 430 may then calculate an average motion saliency from all of the blocks, and calculate a threshold value corresponding to a threshold rate, for example, the top 20 % of blocks with the highest motion saliency, based on a distribution of the average motion saliency of all the blocks. In an embodiment, the motion block detector 430 selects a block having an average motion saliency greater than the threshold value as a motion block.

The motion block linker 440 may further connect motion blocks and trace the moving object region. A reference for determining whether the motion block linker 440 connects example adjacent blocks B1 and B2 depends on the direction which connects blocks B1 and B2.

For example, when the two blocks B1 and B2 are connected in the x axis, the motion block linker 440 connects the two blocks B1 and B2 when a similarity of a directional motion saliency in the y axis is greater than the threshold value. Similarly, when the two blocks B1 and B2 are connected in the y axis, the motion block linker 440 connects the two blocks B1 and B2 when a similarity of a directional motion saliency in the x axis is greater than the threshold value.

Referring again to FIG. 1, in operation S140, a motion value of the moving object region determined through operations S310, S320, and S330 may be estimated. As an example of the estimating, a calculation may be made of a motion vector of a block included in the moving object region of the input image data. That is, in an embodiment, blocks most similar to each other are detected by calculating a mean square error (MSE) among blocks of a previous frame. Then the motion vector is calculated from a similar block and a predetermined block of a current frame. The motion value of the moving object region may be estimated using the calculated motion vector.

As described above, in operation S150, the image data may be compressed by referring to: the background model data, e.g., determined in operations S210, S220, S230, and S240; the motion vector, e.g., calculated through the operations described with reference to FIG. 4; and/or the estimated motion value. The determined background model data may be determined as an I-frame of a Moving Picture Experts Group (MPEG)-1, 2, 4, or H.264. In a security video system where the video data compression system of embodiments of the present invention are applicable, since a camera for filming video data may be generally fixed, a background image may be generally fixed as well. Accordingly, as long as the fixed background image does not change significantly, the fixed background image may be determined as a single reference frame, and thus compression efficiency may be improved.

The moving object region determined through operations S310, S320, and S330 may be a set of blocks having the motion vector, and the blocks correspond to a macroblock of the MPEG-1, 2, 4, or H.264 standards. Accordingly, a motion vector of each of the blocks can be calculated and compression performed using the calculated motion vector. That is, here, remaining blocks excluding the moving object region are compressed into a skipped macroblock identical to an identical block of a previous frame, and thus the compression efficiency may be improved.

In addition, a frame rate of video data may be controlled using the estimated motion value. Specifically, when the estimated motion value is greater than a predetermined threshold value, for example, a corresponding motion may need to be checked. Accordingly, a great number of frames are required and thus more than a predetermined number of frames may be allocated. Further, when the estimated motion value is less than the example predetermined threshold value, a relatively small number of frames may be required to be allocated, and thus the compression efficiency may be improved.

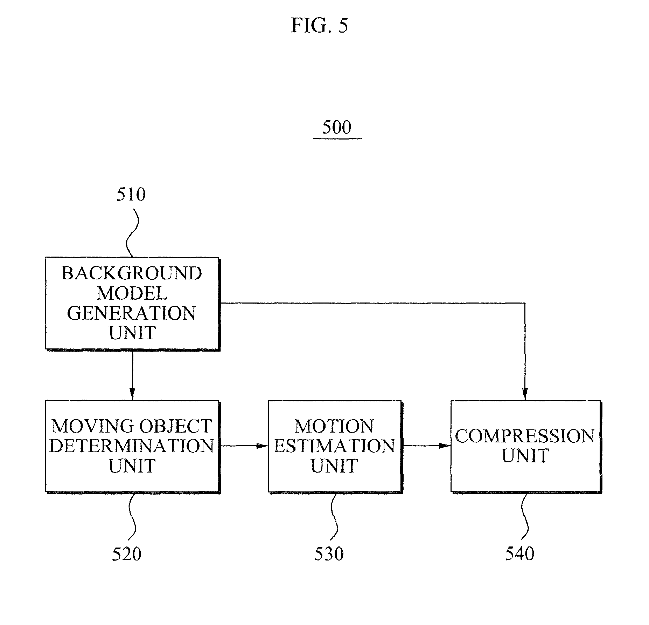

FIG. 5 illustrates an example of a video data compression system 500, according to an embodiment of the present invention.

Referring to FIG. 5, the video data compression system 500 may include a background model generation unit 510, a moving object determination unit 520, a motion estimation unit 530, and a compression unit 540, for example.

The background model generation unit 510 generates background model data of received image data. The background model data indicates image data which is relatively motionless, continuously shown in a predetermined number of frames, and modeled as a background, for example.

The moving object determination unit 520 determines a moving object region based on the input image data and the background model data. The moving object region is obtained from a differential image of the image data and the background model data.

The motion estimation unit 530 may estimate a motion value of the moving object region.

The compression unit 540 may, thus, compress the image data by referring to at least one of the background model data and the estimated motion value.

In addition to the above described embodiments, embodiments of the present invention can also be implemented through computer readable code/instructions in/on a medium, e.g., a computer readable medium, to control at least one processing element to implement any above described embodiment. The medium can correspond to any medium/media permitting the storing and/or transmission of the computer readable code.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as media carrying or controlling carrier waves as well as elements of the Internet, for example. Thus, the medium may be such a defined and measurable structure carrying or controlling a signal or information, such as a device carrying a bitstream, for example, according to embodiments of the present invention. The media may also be a distributed network, so that the computer readable code is stored/transferred and executed in a distributed fashion. Still further, as only an example, the processing element could include a processor or a computer processor, and processing elements may be distributed and/or included in a single device.

While aspects of the present invention have been particularly shown and described with reference to differing embodiments thereof, it should be understood that these exemplary embodiments should be considered in a descriptive sense only and not for the purposes of limitation. Descriptions of features or aspects within each embodiment should typically be considered as available for other similar features or aspects in the remaining embodiments.

Thus, although a few embodiments have been shown and described, it would be appreciated by those skilled in the art that changes may be made in these embodiments without departing from the principles and spirit of the invention, the scope of which is defined in the claims and their equivalents.

**List of Embodiments**

1. A video data compression method, comprising:

generating background model data of image data;

determining a moving object region based on the image data and the background model data;

estimating a motion value of the moving object region; and

compressing the image data using at least one of the background model data and the estimated motion value.

2. The video data compression method of embodiment 1, further comprising receiving the image data.

3. The video data compression method of embodiment 1, wherein the compressing of the image data uses the background model data of the image data and the estimated motion value.

4. The video data compression method of embodiment 1, wherein the generating comprises:

performing a removing of a partial lighting effect of the image data;

calculating a difference between the image data having the partial lighting effect removed and previously generated background model data;

comparing the difference with a predetermined threshold value; and

determining the generated background model data of the image data.

5. The video data compression method of embodiment 4, wherein the comparing of the difference and the determining of the generated background model data of the image data includes determining the image data having the partial lighting effect removed to be the generated background model data of the image data, when the difference is determined to meet the predetermined threshold value.

6. The video data compression method of embodiment 4, wherein the generating of the background model data of the image data further comprises setting the previously generated background model data to be equal to the background model data if the difference does not meet the predetermined threshold value.

7. The video data compression method of embodiment 4, wherein the performing of the removing of the partial lighting effect removes the partial lighting effect based on a histogram equalization or a Retinex filter method.

8. The video data compression method of embodiment 1, wherein the determining of the moving object region comprises:

calculating a difference between the image data and the background model data; and

comparing the difference with a predetermined threshold value.

9. The video data compression method of embodiment 8, wherein the determining of the moving object region further comprises determining a region of the image data to be a moving object region candidate, based on a determining of whether the difference meets the predetermined threshold value.

10. The video data compression method of embodiment 9, wherein the determining of the moving object region further comprises:

selecting one or more moving object region candidates by referring to the difference; and

analyzing a motion of the one or more moving object region candidates to determine the moving object region.

11. The video data compression method of embodiment 8, wherein the determining of the moving object region determines the moving object region based on a corresponding region made up of moving object region candidates being larger than a predetermined size.

12. The video data compression method of embodiment 1, wherein the estimating comprises calculating a motion vector of the moving object region.

13. The video data compression method of embodiment 1, wherein the compressing comprises setting the background model data to be a reference frame.

14. The video data compression method of embodiment 1, wherein the compressing allocates more than a predetermined number of frames when the estimated motion value meets a predetermined threshold value.

15. At least one medium comprising computer readable code to control at least one processing element to implement a video data compression method, the method comprising:

generating background model data of image data;

determining a moving object region based on the image data and the background model data;

estimating a motion value of the moving object region; and

compressing the image data by using at least one of the background model data and the estimated motion value.

16. A video data compression system, comprising:

a background model generation unit to generate background model data from image data;

a moving object determination unit to determine a moving object region based on the image data and the background model data;

a motion estimation unit to estimate a motion value of the moving object region; and

a compression unit to compress the image data using at least one of the background model data and the estimated motion value.

17. The video data compression system of embodiment 16, wherein the background model generation unit comprises:

a compensation unit to remove a partial lighting effect of the image data;

a comparison unit to calculate a difference between the image data having the partial lighting effect removed and previously generated background model data; and

a selection unit to compare the difference and a predetermined threshold value to generate the background model data.

18. The video data compression system of embodiment 16, wherein the moving object determination unit calculates a difference between the image data and the background model data, and compares the difference and a predetermined threshold value to determine the moving object region.

19. The video data compression system of embodiment 18, wherein the moving object determination unit comprises:

a candidate group selection unit to select one or more moving object region candidates by referring to the difference; and

a determination unit to analyze a motion of the one or more moving object region candidates to determine the moving object region.

20. The video data compression system of embodiment 16, wherein the motion estimation unit comprises a calculation unit to calculate a motion vector of the moving object region.

21. A video data compression method, comprising:

generating background model data from a first frame of a surveyed area;

detecting movement of an object within a frame subsequent to the first frame of the surveyed area, considering the generated background model data; and

encoding the object as a Region of Interest (ROI) if the detected movement meets a predetermined threshold.

22. The video data compression method of embodiment 21, further comprising estimating a motion vector of the detected movement of the object.

23. The video data compression method of embodiment 22, further comprising
encoding the object by further using at least one of the background model data and the estimated motion vector.

24. The video data compression method of embodiment 22, wherein the background model data is stored as an I-frame and the estimated motion vector is stored in a non-I-frame.

25. A video data compression method, comprising:

determining a differential image by calculating a difference between at least two sequential images;

calculating a differential motion saliency for blocks of the differential image;

determining a set of blocks of the differential image with the calculated differential motion saliency meeting a threshold; and

generating a moving object region based upon linking the determined set of blocks of the differential image for encoding an image other than a background image corresponding to the two sequential images.

26. The video data compression method of embodiment 25 further comprising:

encoding the moving object region with background model data representing the background image.

**Claims**

1. A video data compression method, comprising:

generating background model data of image data;
determining a moving object region based on the image data and the background model data;
estimating a motion value of the moving object region; and
compressing the image data using at least one of the background model data and the estimated motion value.

2. The video data compression method of claim 1, further comprising receiving the image data.

3. The video data compression method of claim 1, wherein the compressing of the image data uses the background model data of the image data and the estimated motion value.

4. The video data compression method of claim 1, wherein the generating comprises:

performing a removing of a partial lighting effect of the image data;
calculating a difference between the image data having the partial lighting effect removed and previously generated background model data;
comparing the difference with a predetermined threshold value; and
determining the generated background model data of the image data.

5. The video data compression method of claim 4, wherein the comparing of the difference and the determining of the generated background model data of the image data includes determining the image data having the partial lighting effect removed to be the generated background model data of the image data, when the difference is determined to meet the predetermined threshold value,
wherein the generating of the background model data of the image data further comprises setting the previously generated background model data to be equal to the background model data if the difference does not meet the predetermined threshold value, and/or
wherein the performing of the removing of the partial lighting effect removes the partial lighting effect based on a histogram equalization or a Retinex filter method.

6. The video data compression method of claim 1, wherein the determining of the moving object region comprises:

   calculating a difference between the image data and the background model data; and
   comparing the difference with a predetermined threshold value;
   determining a region of the image data to be a moving object region candidate, based on a determining of whether the difference meets the predetermined threshold value;
   selecting one or more moving object region candidates by referring to the difference; and
   analyzing a motion of the one or more moving object region candidates to determine the moving object region.

7. The video data compression method of claim 1, wherein the determining of the moving object region comprises:

   calculating a difference between the image data and the background model data; and
   comparing the difference with a predetermined threshold value; and
   determining the moving object region based on a corresponding region made up of moving object region candidates being larger than a predetermined size.

8. The video data compression method of claim 1, wherein the estimating comprises calculating a motion vector of the moving object region.

9. The video data compression method of claim 1, wherein the compressing comprises setting the background model data to be a reference frame, and/or allocating more than a predetermined number of frames when the estimated motion value meets a predetermined threshold value.

10. A video data compression system, comprising:

    a background model generation unit to generate background model data from image data;
    a moving object determination unit to determine a moving object region based on the image data and the background model data;
    a motion estimation unit to estimate a motion value of the moving object region; and
    a compression unit to compress the image data using at least one of the background model data and the estimated motion value.

11. A video data compression method, comprising:

    generating background model data from a first frame of a surveyed area;
    detecting movement of an object within a frame subsequent to the first frame of the surveyed area, considering the generated background model data; and
    encoding the object as a Region of Interest (ROI) if the detected movement meets a predetermined threshold.

12. The video data compression method of claim 11, further comprising estimating a motion vector of the detected movement of the object.

13. The video data compression method of claim 12, further comprising:

encoding the object by further using at least one of the background model data and the estimated motion vector,

wherein the background model data is stored as an I-frame and the estimated motion vector is stored in a non-I-frame.

**14.** A video data compression method, comprising:

determining a differential image by calculating a difference between at least two sequential images;
calculating a differential motion saliency for blocks of the differential image;
determining a set of blocks of the differential image with the calculated differential motion saliency meeting a threshold; and
generating a moving object region based upon linking the determined set of blocks of the differential image for encoding an image other than a background image corresponding to the two sequential images.

**15.** The video data compression method of claim 14 further comprising:

encoding the moving object region with background model data representing the background image.

FIG. 1

START

RECEIVE IMAGE DATA — S110

GENERATE BACKGROUND MODEL DATA — S120

DETERMINE MOVING OBJECT REGION — S130

ESTIMATE MOTION VALUE OF MOVING OBJECT REGION — S140

COMPRESS IMAGE DATA — S150

END

FIG. 2

S120

S110

REMOVE PARTIAL LIGHTING EFFECT ~ S210

CALCULATE DIFFERENCE ~ S220

DIFFERENCE > THRESHOLD VALUE ~ S230    NO

YES

UPDATE BACKGROUND MODEL DATA ~ S240

S130

FIG. 3

S130

S120

CALCULATE DIFFERENCE BETWEEN IMAGE DATA AND BACKGROUND MODEL DATA — S310

ANALYZE MOTION — S320

DETERMINE MOVING OBJECT REGION — S330

S140

FIG. 4

FIG. 5

500

510

BACKGROUND
MODEL
GENERATION
UNIT

MOVING OBJECT
DETERMINATION
UNIT

MOTION
ESTIMATION
UNIT

COMPRESSION
UNIT

520

530

540